(19) Europäisches Patentamt / European Patent Office / Office européen des brevets

(11) **EP 2 704 967 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**24.11.2021 Patentblatt 2021/47**

(45) Hinweis auf die Patenterteilung:
**18.05.2016 Patentblatt 2016/20**

(21) Anmeldenummer: **12710215.0**

(22) Anmeldetag: **16.03.2012**

(51) Int Cl.:
***B65G 47/31*** *(2006.01)*     ***B65G 47/84*** *(2006.01)*
***B65G 54/02*** *(2006.01)*

(86) Internationale Anmeldenummer:
**PCT/EP2012/054725**

(87) Internationale Veröffentlichungsnummer:
**WO 2012/150082 (08.11.2012 Gazette 2012/45)**

(54) **VERFAHREN ZUM BETREIBEN EINES ELEKTROMAGNETISCHEN TRANSFERSYSTEMS UND TRANSFERSYSTEM**

METHOD FOR OPERATING AN ELECTROMAGNETIC TRANSFER SYSTEM, AND TRANSFER SYSTEM

PROCÉDÉ POUR FAIRE FONCTIONNER UN SYSTÈME DE TRANSFERT ÉLECTROMAGNÉTIQUE ET SYSTÈME DE TRANSFERT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2011 DE 102011075176**

(43) Veröffentlichungstag der Anmeldung:
**12.03.2014 Patentblatt 2014/11**

(73) Patentinhaber: **Robert Bosch GmbH**
**70442 Stuttgart (DE)**

(72) Erfinder:
• **REINISCH, Martin**
  **73733 Esslingen (DE)**
• **VAN DE LOECHT, Heinrich**
  **76461 Muggensturm (DE)**

(74) Vertreter: **DREISS Patentanwälte PartG mbB**
**Friedrichstraße 6**
**70174 Stuttgart (DE)**

(56) Entgegenhaltungen:
**DE-A1-102008 040 204     DE-A1-102009 029 314**
**US-A1- 2010 084 247**

EP 2 704 967 B2

**Beschreibung**

Die Erfindung betrifft ein Verfahren zum Betreiben eines elektromagnetischen Transfersystems nach dem Oberbegriff des Anspruchs 1. Ferner betrifft die Erfindung ein Transfersystem zum Durchführen eines erfindungsgemäßen Verfahrens.

Ein Verfahren zum Betreiben eines elektromagnetischen Transfersystems nach dem Oberbegriff des Anspruchs 1 ist aus der DE 102009029314 A1 oder US 6,876,107 B2 bekannt. Dort ist beispielsweise in der Fig. 5 ein Transfersystem dargestellt, bei dem auf einer Trägerbahn mehrere, elektromagnetische bewegbare Transportelemente angeordnet sind, die individuell angesteuert und bewegt werden können. Ein derartiges Transfersystem dient beispielsweise dazu, Gegenstände, die auf einer Zufördereinrichtung in üblicherweise unterschiedlich großen Abständen zugefördert werden, mittels der einzelnen Transportelemente zu übernehmen, entlang einer Transportstrecke zu führen und an eine zweite, dem Transfersystem nachgestaltete Fördereinrichtung in definierten Abständen zu übergeben. Die bei derartigen Transfersystemen eingesetzten Transportelemente weisen eine bestimmte Baulänge in deren Bewegungsrichtung auf der Trägerbahn auf. Bei Gegenständen, die in Förderrichtung der Transportelemente eine Erstreckung bzw. Größe aufweisen, die der Baulänge des Transportelements entspricht, ist es damit möglich, Gegenstände, die mit relativ großem Abstand in den Bereich des Transfersystems mittels der Zufördereinrichtung einlaufen, an die nachgestaltete Fördereinrichtung in einem Abstand abzugeben, der gegenüber dem Abstand der einlaufenden Gegenstände deutlich verkleinert ist. Theoretisch ist es bei Gegenständen, die in Transportrichtung im Transfersystem eine Länge aufweisen, die größer ist als die Länge des Transportelements möglich, dass die Gegenstände direkt aneinander anschließend in die nachgeordnete Fördereinrichtung übergeben werden.

Problematisch sind jedoch die Anwendungen, bei denen die Gegenstände eine derartige Größe in deren Förderrichtung im Transfersystem aufweisen, die deutlich geringer ist als die Baulänge des Transportelementes. Da im Übergabebereich von dem Transfersystem an die nachgeschaltete Fördereinrichtung die Transportelemente im Extremfall lediglich direkt aneinander anschließen können, verbleibt somit zwischen den einzelnen Gegenständen in den Transportelementen ein Abstand, der sich aus der Differenz der Länge der Transportelemente und der Länge des Gegenstandes bzw. der Gegenstände in Förderrichtung ergibt. Es ist somit mit der aus der US 6,876,107 B2 bekannten Vorrichtung bzw. deren Betriebsverfahren nicht möglich, Gegenstände, die eine Größe bzw. Länge in Transportrichtung aufweisen, die geringer ist als die des Transportelementes an die nachgeschaltete Fördereinrichtung in einem Abstand zu übergeben, der geringer ist als die Differenz der Länge des Transportelementes und der Gegenstände.

Aus der DE 10 2009 029 314 A1 ist bereits eine Transportvorrichtung zur Förderung eines Produkts bekannt, welche ein bewegbares Förderelement zum Fördern eines Produkts, eine ortsfeste, umlaufend angeordnete Laufschiene zur Führung des Förderelements und eine Linearmotor-Antriebsvorrichtung zum Antrieb des Förderelements umfasst. Das Förderelement weist einen Grundkörper, einen Schiebefinger, welcher mit dem Produkt in Kontakt bringbar ist, und einen Permanentmagneten auf, der mit der Linearmotor-Antriebsvorrichtung in Wirkverbindung steht.

Offenbarung der Erfindung

Ausgehend von dem dargestellten Stand der Technik liegt der Erfindung die Aufgabe zugrunde, ein Verfahren zum Betreiben eines elektromagnetischen Transfersystems nach dem Oberbegriff des Anspruchs 1 derart weiterzubilden, dass die Gegenstände mittels der Transportelemente an eine nachgeschaltete Fördereinrichtung derart abgegeben werden können, dass sie dort einen gegenseitigen Abstand voneinander aufweisen, der geringer ist als die Differenz aus der Länge eines Transportelementes und der Gegenstände. Diese Aufgabe wird bei einem Verfahren zum Betreiben eines elektromagnetischen Transfersystems mit den Merkmalen des Anspruchs 1 gelöst. Der Erfindung liegt dabei die Idee zugrunde, die Vorschubgeschwindigkeit der nachgeschalteten Fördereinrichtung bzw. die Fördergeschwindigkeit des Transportelementes auf der Trägerbahn im Übergabebereich derart zu variieren, dass sich quasi ein Geschwindigkeitsüberschuss der Gegenstände im Übergabepunkt von dem Transfersystem an die nachgeordnete Fördereinrichtung ergibt, so dass die Gegenstände auf die nachgeordnete Fördereinrichtung in einem Abstand abgegeben werden können, der geringer ist als die Länge des Förderelementes in Transportrichtung.

Vorteilhafte Weiterbildungen des erfindungsgemäßen Verfahrens zum Betreiben eines elektromagnetischen Transfersystems sind in den Unteransprüchen angegeben.

Um die mechanischen Belastungen sowohl an dem Transportelement, als auch insbesondere an den Gegenständen zu verringern wird in einer besonders bevorzugten Variante des Verfahrens vorgeschlagen, dass die Geschwindigkeit des Transportelementes bereits entlang eines Wegabschnitts vor dem Übergabebereich erhöht wird. Es ist somit möglich, die Geschwindigkeit des Förderelementes bis zum Übergabepunkt kontinuierlich zu steigern, so dass sich ein besonders produktschonender Transport ergibt.

Um eine möglichst hohe Leistung des Transfersystems zu ermöglichen, ist es erforderlich bzw. sinnvoll, mehrere Transportelemente an der Trägerbahn anzuordnen bzw. anzutreiben. Um bei einer derartigen Anordnung von mehreren Transportelementen die Leistung zu maximieren wird weiterhin vorgeschlagen, dass deren gegenseitiger Abstand in einem Bereich vor dem Übergabebereich bis auf einen Mindestabstand zwischen den Transportelementen reduziert wird.

Ein Transfersystem zum Durchführen eines erfindungsgemäßen Verfahrens Zeichnet sich dadurch aus, dass das Transfersystem die Merkmale des Anspruchs 6 entspricht.

Eine besonders einfache mechanische Konstruktion bzw. Ausbildung der Transportelemente wird ermöglicht, wenn der Übergabebereich der Gegenstände in die (nachgeschaltete) Fördereinrichtung sich in einem Kurveneingangsbereich der Transportbahn befindet. In diesem Fall kann das Transportelement aufgrund der Ausbildung der Transportbahn aus dem weiteren Förderweg des Gegenstands heraus geschwenkt werden, so dass das Transportelement insbesondere für einen nachfolgenden Gegenstand kein Hindernis darstellt.

Weitere Vorteile, Merkmale und Einzelheiten der Erfindung ergeben sich aus der nachfolgenden Beschreibung bevorzugter Ausführungsbeispiele sowie anhand der Zeichnung:

Diese zeigt in:

Fig. 1     eine stark-vereinfachte Darstellung eines Transfersystems für Gegenstände,

Fig. 2     einen Teilabschnitt des Transfersystems gemäß Fig. 1, wobei gegenüber der Fig. 1 Gegenstände transportiert werden, die eine deutlich geringere Größe bzw. Länge in Förderrichtung aufweisen und

Fig. 3     den Ausschnitt gemäß Fig. 2, bei der die Transportelemente des Transfersystems gemäß dem erfindungsgemäßen Verfahren angetrieben werden.

Gleiche Bauteile bzw. Bauteile mit gleicher Funktion sind mit den gleichen Bezugsziffern versehen.

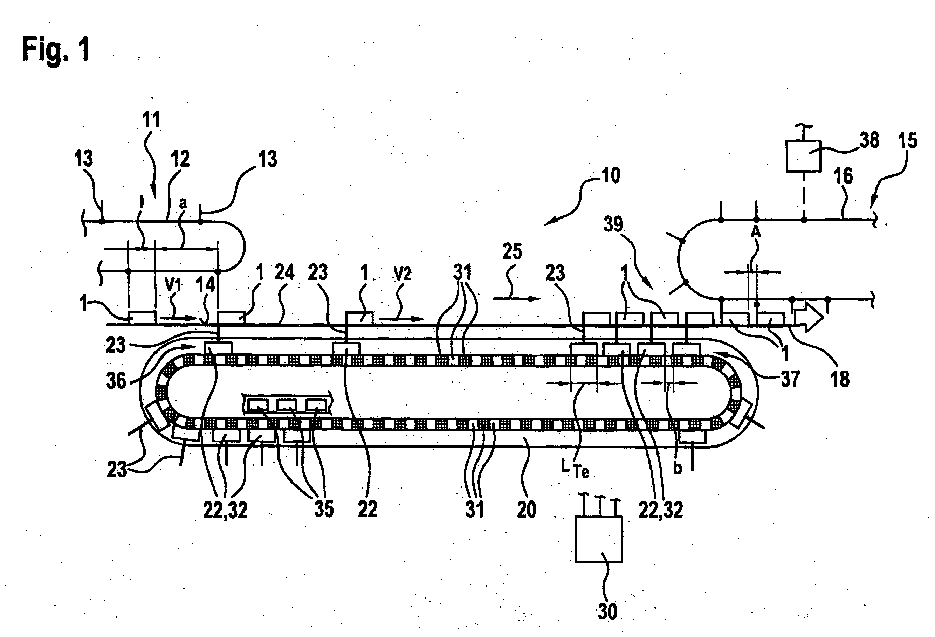

In der Fig. 1 ist ein Transfersystem 10 zum Fördern von Gegenständen 1 bzw. Produkten dargestellt. Die Gegenstände 1 sind in den Figuren lediglich symbolisch dargestellt. Bei den Gegenständen 1 kann es sich dabei beispielsweise um Verpackungen handeln, die zum Beispiel mit Schokoriegel, Keksen oder ähnlichem befüllt sind, oder aber um sonstige Gegenstände, die im Anschluss an das Transfersystem 10 mittels einer Verpackungsmaschine verpackt werden sollen.

Die Gegenstände 1 werden mittels einer im Einzelnen nicht dargestellten Zufördereinrichtung 11 in den Bereich des Transfersystems 10 gefördert. Bei der Zufördereinrichtung 11 kann es sich beispielsweise um eine Packgütkette 12 mit Mitnehmern 13 handeln, die in gleichmäßigen Abständen an der Packgutkette 12 befestigt sind. Der Abstand a zwischen zwei Gegenständen 1 im Bereich der Zufördereinrichtung 11 ergibt sich somit aus der Längendifferenz zwischen dem Abstand zweier Mitnehmer 13 und der Länge I eines Gegenstandes 1.

Die Gegenstände 1 werden mittels der Mitnehmer 13 auf einer vorzugsweise ebenen Transportoberfläche 14, z.B. in Form eines Rutschbleches 24, kontinuierlich oder getaktet entlang gefördert. Es liegt selbstverständlich auch im Rahmen der Erfindung, wenn die Zufördereinrichtung 11 als einfaches (Förder-) Band ausgebildet ist, auf der die Gegenstände 1 in ungleichförmigen Abständen a gefördert werden, so dass keine Mitnehmer 13 o.ä. vorgesehen werden müssen.

Mittels des Transfersystems 10 werden die Gegenstände 1 aus der Zufördereinrichtung 11 übernommen und an eine, dem Transfersystem 10 nachgeschaltete Fördereinrichtung 15 übergeben. Die Fördereinrichtung 15 ist im dargestellten Ausführungsbeispiel ebenfalls als Packgutkette 16 mit Mitnehmern 17 ausgebildet. Auch im Bereich der nachgeschalteten Fördereinrichtung 15 gleiten die Gegenstände 1 auf einer ebenen Transportoberfläche 18 entlang. Es liegt auch im Rahmen der Erfindung, dass die Gegenstände 1 aus dem Transfersystem 10 direkt beispielsweise in einen Packstoffschlauch eingeschoben werden, der anschließend versiegelt und zur Bildung von Beutelpackungen vom Packstoffschlauch abgetrennt wird.

Das Transfersystem 10 ist als sogenanntes elektromagnetisches Transfersystem 10 ausgebildet. Hierzu weist das Transfersystem 10 eine geschlossene, im Ausführungsbeispiel ovalförmige Trägerbahn 20 für wenigstens ein, bevorzugt jedoch eine Vielzahl von Transportelementen 22 auf. Jedes der Transportelemente 22, die identisch ausgebildet sind, weist einen Mitnehmer 23 auf, der zum Transport eines Gegenstandes 1 auf dem Rutschblech 24 in Anlagekontakt mit dem jeweiligen Gegenstand 1 kommt und diesen in Förderrichtung 25 fördert bzw. transportiert.

Im Bereich der Trägerbahn 20 sind eine Vielzahl von mittels einer Steuereinrichtung 30 individuell bestrombaren Induktionsspulen 31 angeordnet. Die Induktionsspulen 31 wirken mit wenigstens einem, am Transportelement 22 angeordneten, im Einzelnen in der Fig. 1 nicht erkennbaren Permanentmagnetelement 32 zusammen. Die Bewegung des Transportelements 22 entlang der Trägerbahn 20 erfolgt durch Bestromen der einzelnen Induktionsspulen 31 entlang der Trägerbahn 20 derart, dass die jeweilige Induktionsspule 31 eine anziehende oder eine abstoßende Kraft auf das jeweilige Permanentmagnetelement 32 an dem Transportelement 22 ausübt, und dadurch das Transportelement 22 in gewünschter Weise mittels beliebiger Geschwindigkeitsprofile vorwärts bewegt.

Ferner sind entlang der Trägerbahn 20 Positionserkennungsmittel 35 angeordnet, die die jeweilige Position des Transportelements 22 entlang der Trägerbahn 22 erfassen und diese der Steuereinrichtung 30 als Eingangswert zuführen Aufgrund der jeweiligen Position der Transportelemente 22 können diese mittels der Steuereinrichtung 30 individuell angesteuert bzw bewegt werden.

Die Übernahme der Gegenstände 1 aus der Zufördereinrichtung 11 erfolgt in einem Kurvenausgangsbereich 36 der Trägerbahn 20, wobei die Mitnehmer 23 der Transportelemente 22 beispielsweise in einen Längsschlitz des Rutschblechs 24 eingreifen und dabei in Wirkverbindung mit dem jeweiligen Gegenstand 1 geraten und dann diesen vor sich herschieben. Die Übergabe der Gegenstände 1 an die nachgeschaltete Fördereinrichtung 15 erfolgt in einem Kurveneingangsbereich 37 der Trägerbahn 20, wobei die Mitnehmer 23 der Transportelemente 22 nach und nach in dem angesprochenen Längsschlitz des Rutschblechs 24 eintauchen und somit außer Wirkverbindung mit den Gegenständen 1 geraten.

Die nachgeschaltete Fördereinrichtung 15 weist einen Antrieb 38 auf, dessen Drehzahl bzw. Fördergeschwindigkeit der Fördereinrichtung 15 der Steuereinrichtung 30 des Transfersystems 10 als Eingangswert zugeführt wird.

In der Fig. 1 ist der Fall dargestellt, bei der die Länge I eines Gegenstands 1 in dessen Förderrichtung in etwa gleich groß ist wie die Länge $L_{Te}$ eines Transportelements 22 in Förderrichtung. Mittels des Transfersystems 10 wird jeweils ein Gegenstand 1 aus der Zuführeinrichtung 11 mittels eines Transportelements 22 übernommen und an die nachgeschaltete Fördereinrichtung 15 übergeben. Hierbei ist der Abstand A der Gegenstände 1 im Bereich der nachgeschalteten Fördereinrichtung 15 kleiner als der Abstand a der Gegenstände 1 im Bereich der Zuführeinrichtung 11. Um den Abstand zwischen den einzelnen Gegenständen 1 in gewünschter Weise zwischen der Zuführeinrichtung 11 und der nachgeschalteten Fördereinrichtung 15 zu verringern, werden die Gegenstände 1 mittels des jeweiligen Transportelements 22 auf dem Rutschblech 24 beschleunigt bewegt, d.h., dass die Geschwindigkeit $v_2$ im Bereich der Transfereinrichtung 10 für den Gegenstand 1 größer ist als die Geschwindigkeit $v_1$ im Bereich der Zuführeinrichtung 11.

Bereits in einem Bereich 39 auf dem Rutschblech 24, der vor dem Übergabebereich der Gegenstände 1 an die nachgeschaltete Fördereinrichtung 15 im Kurveneingangsbereich 37 liegt, weisen die einzelnen Transportelemente 22 einen Abstand b voneinander auf, der dem Mindestabstand der Transportelemente 22 voneinander entspricht. Dieser Mindestabstand b ist beispielsweise aus Sicherheitsgründen erforderlich, um Kollisionen zwischen den einzelnen Transportelementen 22 zu vermeiden, bzw. durch die angesprochene Ansteuerung bzw. Bestromung der Induktionsspulen 31 die einzelnen Transportelemente 22 in gewünschter Weise kontrolliert bewegen zu können.

Dadurch, dass die Länge I der Gegenstände 1 in dem in der Fig. 1 dargestellten Ausführungsbeispiel in etwa der Länge $L_{Te}$ der Transportelemente 22 entspricht, kann der Abstand zwischen den Gegenständen 1 im Bereich des Transfersystems 10 in gewünschter Weise zur Übergabe der Gegenstände 1 an die nachgeschaltete Fördereinrichtung 15 verringert werden.

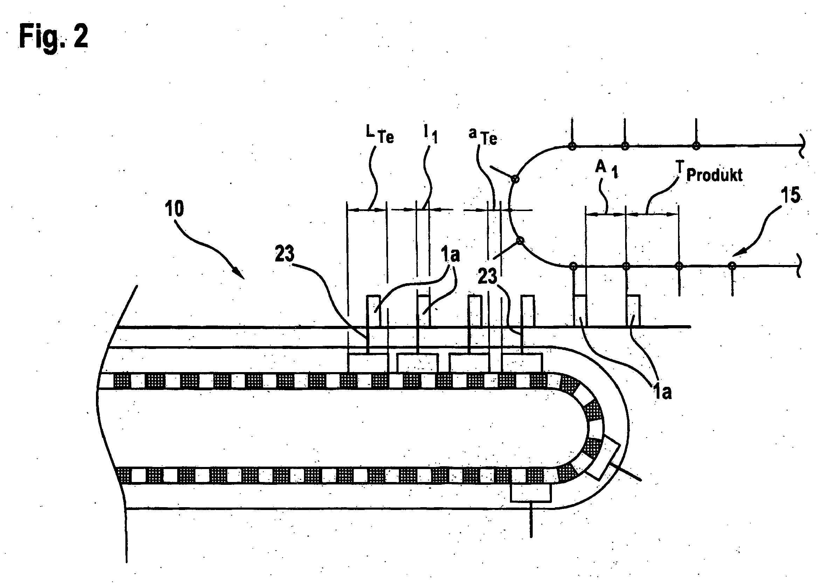

In der Fig. 2 ist ein Teilausschnitt des Transfersystems 10 in dem Bereich dargestellt, in dem die Gegenstände 1a an die nachgeschaltete Fördereinrichtung 15 übergeben werden. Wesentlich hierbei ist, dass die Gegenstände 1a, im Gegensatz zu den Gegenständen 1 der Fig. 1, eine Länge $I_1$ aufweisen, die deutlich geringer ist als die Länge I der Gegenstände 1. Insbesondere ist die Länge $I_1$ der Gegenstände 1a auch deutlich geringer als die Länge $L_{Te}$ eines Transportelements 22.

Man erkennt anhand der Fig. 1, dass der Abstand $A_1$ zwischen zwei Gegenständen 1a im Bereich der nachgeschalteten Fördereinrichtung 15 nicht geringer sein kann als der Abstand zweier Mitnehmer 23 von zwei Transportelementen 22, reduziert um die Länge $I_1$ eines Gegenstands 1a.

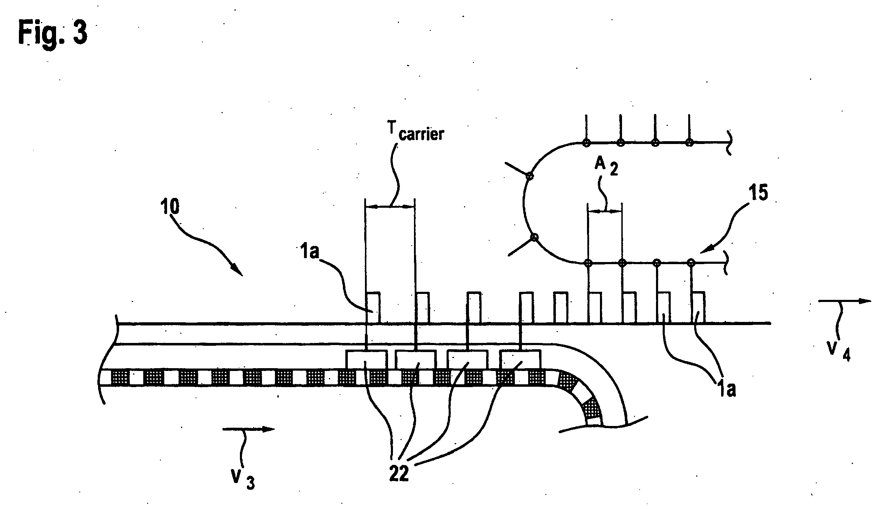

In der Fig. 3 ist demgegenüber das Transfersystem 10 dargestellt, wenn dieses erfindungsgemäß betrieben wird. Man erkennt insbesondere, dass der Abstand $A_2$ zwischen zwei Gegenständen 1a im Bereich der nachgeschalteten Fördereinrichtung 15 geringer ist als der zuvor im Zusammenhang mit der Fig. 2 angesprochene Abstand $A_1$ zwischen zwei Gegenständen 1a im Bereich des Transfersystems 10. Dies wird dadurch erreicht, dass die Transportelemente 22 bzw. die Gegenstände 1 a spätestens im Übergabebereich bzw. Übergabepunkt von den Transportelementen 22 an die nachgeschaltete Fördereinrichtung 15, vorzugsweise jedoch bereits auf einer Förderstrecke bevor, auf eine Geschwindigkeit $v_3$ beschleunigt werden, die größer ist als die Geschwindigkeit $v_4$ der nachgeschalteten Fördereinrichtung 15. Das bedeutet, dass die Gegenstände 1a mit einem Geschwindigkeitsüberschuss $\Delta v$ in den Bereich der nachgeschalteten Fördereinrichtung 15 eingeschleust werden.

Hierbei lässt sich die erforderliche Geschwindigkeit $v_{Te}$ des Transportelements 22 im Übergabepunkt zur Erzielung eines bestimmten Abstands A im Bereich der Fördereinrichtung 15 nach der folgenden Formel berechnen:

$$v_{Te} = (L_{Te} + a_{Te})/A$$

wobei $L_{Te}$ die Baulänge des Transportelements 22, $a_{Te}$ der Mindestabstand zwischen zwei Transportelementen 22 im Übergabebereich und A der Abstand zweier Gegenstände 1 auf der Fördereinrichtung 15 bedeutet.

Alternativ hierzu wäre es auch denkbar, dass im jeweiligen Übergabepunkt eines Gegenstands 1a von dem Transportelement 22 an die nachgeschaltete Fördereinrichtung 15 der Antrieb 38 der Fördereinrichtung 15 die Geschwindigkeit $v_4$ auf einen Wert reduziert, der geringer ist als die Geschwindigkeit $v_3$ des betreffenden Transportelements 22 im Übergabebereich bzw. im Übergabezeitpunkt. Weiterhin ist es auch denkbar, beide verfahrensgemäß vorgesehenen Maßnahmen, d.h. sowohl die Beschleunigung des Förderelements 22, als auch die zeitweilige Verzögerung der nachgeschalteten Fördereinrichtung 15, miteinander zu kombinieren.

Mittels des erfindungsgemäßen Verfahrens ist es prinzipiell möglich, den Abstand $A_1$, $A_2$ zweier Gegenstände 1a in der nachgeschalteten Fördereinrichtung 15 auf ein beliebiges Maß, theoretisch bis zur direkten Anlage zweier Gegenstände 1a, zu verringern.

Das beschriebene Transfersystem 10 kann in vielfältiger Art und Weise abgewandelt bzw. modifiziert werden, ohne vom Erfindungsgedanken abzuweichen.

**Patentansprüche**

1. Verfahren zum Betreiben eines elektromagnetischen Transfersystems (10), wobei das Transfersystem (10) zum Fördern von Gegenständen (1; 1a) an eine nachgeordnete Fördereinrichtung (15) dient, mit einer vorzugsweise geschlossen ausgebildeten Trägerbahn (20), an der wenigstens ein bewegliches Transportelement (22) für einen Gegenstand (1; 1a) angeordnet ist, der auf einer Transportfläche (24) von dem Transportelement (22) entlang bewegt wird, wobei das Transportelement (22) wenigstens ein Permanentmagnetelement (32) aufweist, das in Wirkverbindung mit entlang der Trägerbahn (20) angeordneten, individuell, bestrombaren Induktionsspulen (31) angeordnet ist, wobei Positionserkennungsmittel (35) zum Erfassen der Position des Transportelements (22) an der Trägerbahn (20) vorgesehen sind, und wobei der Gegenstand (1; 1a) in einem Übergabebereich (37) von der Transportfläche (24) an die nachgeordnete, einen separaten Antrieb (38) aufweisende Fördereinrichtung (15) übergeben wird,
**dadurch gekennzeichnet,**
**dass** zur Verringerung des Abstandes (A, $A_1$, $A_2$) zwischen einzelnen Gegenständen (1; 1a) auf der nachgeordneten Fördereinrichtung (15) die Fördergeschwindigkeit ($v_4$) der Fördereinrichtung (15) im Übergabepunkt von der Transportfläche (24) an die Fördereinrichtung (15) gegenüber der Geschwindigkeit ($v_2$) des Transportelements (22) zeitweise verringert bzw. die Geschwindigkeit ($v_2$) des Transportelements (22) im Übergabepunkt gegenüber der Fördergeschwindigkeit ($v_4$) der Fördereinrichtung (15) erhöht wird.

2. Verfahren nach Anspruch 1,
**dadurch gekennzeichnet,**
**dass** die Geschwindigkeit ($v_2$) des Transportelements (22) bereits entlang einer Wegabschnitts vor dem Übergabepunkt erhöht wird.

3. Verfahren nach Anspruch 1 oder 2,
**dadurch gekennzeichnet,**
**dass** mehrere Transportelemente (22) vorgesehen sind, deren gegenseitiger Abstand in einem Bereich vor dem Übergabepunkt bis auf einen Mindestabstand ($a_{Te}$) zwischen den Transportelementen (22) reduziert wird.

4. Verfahren nach einem der Ansprüche 1 bis 3,
**dadurch gekennzeichnet,**
**dass** die Gegenstände (1; 1a) mittels des wenigstens einen Transportelements (22) aus einer Zuführdereinrichtung (11) übernommen werden, und dass das wenigstens eine Transportelement (22), mit Ausnahme einer ggf. zeitweiligen Geschwindigkeitsreduzierung zur Übernahme der Gegenstände (1; la) aus der Zuführdereinrichtung (11), kontinuierlich mit konstanter Geschwindigkeit angetrieben wird.

5. Verfahren nach einem der Ansprüche 1 bis 4,
**dadurch gekennzeichnet,**
**dass** die Gegenstände (1; 1a) auf der Transportfläche (24) durch das Transportelement (22) entlang geschoben werden.

6. Transfersystem (10) zum Durchführen eines Verfahrens nach einem der Ansprüche 1 bis 5, wobei das Transfersystem (10) zum Fördern von Gegenständen (1; 1a) an eine nachgeordnete Fördereinrichtung (15) dient, mit einer vorzugsweise geschlossen ausgebildeten Trägerbahn (20), an der wenigstens ein bewegliches Transportelement (22) für einen Gegenstand (1; 1a) angeordnet ist, der auf einer Transportfläche (24) von dem Transportelement (22) entlang bewegt wird, wobei das Transportelement (22) wenigstens ein Permanentmagnetelement (32) aufweist, das in Wirkverbindung mit entlang der Trägerbahn (20) angeordneten, individuell bestrombaren Induktionsspulen (31) angeordnet ist, wobei Positionserkennungsmittel (35) zum Erfassen der Position des Transportelements (22) an der Trägerbahn (20) vorgesehen sind, und wobei der Gegenstand (1; 1a) in einem Übergabebereich (37) von der Transportfläche (24) an die nachgeordnete, einen separaten Antrieb (38) aufweisende Fördereinrichtung (15) übergeben wird, **dadurch gekennzeichnet, dass** eine Steuereinrichtung (30) vorgesehen ist, die das wenigstens ein Transportelement (22) oder der Fördereinrichtung (15) derart ansteuert, dass im Übergabepunkt des Gegenstands (1; 1a) an die Fördereinrichtung (15) dieser mit Geschwindigkeitsüberschuss in die Fördereinrichtung (15) gelangt.

7. Transfersystem nach Anspruch 6,
**dadurch gekennzeichnet,**
**dass** der Übergabebereich der Gegenstände (1; 1a) in die Fördereinrichtung (15) sich in einem Kurveneingangsbereich (37) der Transportbahn (20) befindet.

8. Transfersystem nach Anspruch 6 oder 7,
**dadurch gekennzeichnet,**

**dass** der Übernahmebereich der Gegenstände (1; 1a) aus der Zufördereinrichtung (11) sich in einem Kurvenausgangsbereich (36) der Transportbahn (20) befindet.

9. Transfersystem nach einem der Ansprüche 6 bis 8, **dadurch gekennzeichnet,**
   **dass** das Transportelement (22) einen Mitnehmer (23) zur schiebenden Anlage an den Gegenstand (1; 1a) aufweist.

**Claims**

1. Method for operating an electromagnetic transfer system (10), wherein the transfer system (10) serves to convey objects (1; la) to a downstream conveying device (15), having a preferably closed carrier path (20) on which at least one moving transport element (22) for an object (1; 1a) is arranged, the said object being moved along on a transport surface (24) by the transport element (22), wherein the transport element (22) has at least one permanent magnet element (32) which is arranged in operative connection with induction coils (31) which are arranged along the carrier path (20) and to which current can be supplied individually, wherein position identification means (35) are provided for detecting the position of the transport element (22) on the carrier path (20), and wherein the object (1; la) is transferred from the transport surface (24) to the downstream conveying device (15), which has a separate drive (38), in a transfer region (37),
   **characterized**
   **in that**, in order to reduce the distance (A, A1, A2) between individual objects (1; la) on the downstream conveying device (15), the conveying speed (v4) of the conveying device (15) at the transfer point from the transport surface (24) to the conveying device (15) is temporarily reduced in relation to the speed (v2) of the transport element (22) or the speed (v2) of the transport element (22) at the transfer point is increased in relation to the conveying speed (v4) of the conveying device (15).

2. Method according to Claim 1,
   **characterized**
   **in that** the speed (v2) of the transport element (22) is already increased along a stretch upstream of the transfer point.

3. Method according to Claim 1 or 2,
   **characterized**
   **in that** a plurality of transport elements (22) are provided, the distance of the said transport elements in relation to one another being reduced down to a minimum distance (aTe) between the transport elements (22) in a region upstream of the transfer point.

4. Method according to one of Claims 1 to 3,
   **characterized**
   **in that** the objects (1; 1a) are accepted from a delivery device (11) by means of the at least one transport element (22), and
   **in that** the at least one transport element (22), with the exception of a possibly temporary reduction in speed for accepting the objects (1; la) from the delivery device (11), is continuously driven at a constant speed.

5. Method according to one of Claims 1 to 4,
   **characterized**
   **in that** the objects (1; 1a) are pushed along on the transport surface (24) by the transport element (22).

6. Transfer system (10) for carrying out a method according to one of Claims 1 to 6, wherein the transfer system (10) serves to convey objects (1; la) to a downstream conveying device (15), having a preferably closed carrier path (20) on which at least one moving transport element (22) for an object (1; la) is arranged, the said object being moved along on a transport surface (24) by the transport element (22), wherein the transport element (22) has at least one permanent magnet element (32) which is arranged in operative connection with induction coils (31) which are arranged along the carrier path (20) and to which current can be supplied individually, wherein position identification means (35) are provided for detecting the position of the transport element (22) on the carrier path (20), and wherein the object (1; 1a) is transferred from the transport surface (24) to the downstream conveying device (15), which has a separate drive (38), in a transfer region (37),
   **characterized**
   **in that** a control device (30) is provided, the said control device driving the at least one transport element (22) or the conveying device (15) in such a way that, at the transfer point of the object (1; 1a) to the conveying device (15), the said object enters the conveying device (15) at excess speed.

7. Transfer system according to Claim 6,
   **characterized**
   **in that** the transfer region of the objects (1; 1a) into the conveying device (15) is located in a curve entry region (37) of the transport path (20).

8. Transfer system according to Claim 6 or 7,
   **characterized**
   **in that** the acceptance region of the objects (1; 1a) from the delivery device (11) is located in a curve exit region (36) of the transport path (20).

9. Transfer system according to one of Claims 6 to 8,
   **characterized**
   **in that** the transport element (22) has a driver (23) for bearing against the object (1; 1a) so as to push it.

**Revendications**

1.  Procédé pour faire fonctionner un système de transfert électromagnétique (10), le système de transfert (10) servant au convoyage d'objets (1 ; la) sur un dispositif de convoyage (15) situé en aval, comprenant une bande de support (20) réalisée de preference de manière fermée, sur laquelle est dispose au moins un élément de transport mobile (22) pour un objet (1 ; la) qui est déplacé le long d'une surface de transport (24) par l'élément de transport (22), l'élément de transport (22) comprenant au moins un élément d'aimant permanent (32) qui est disposé en liaison fonctionnelle avec des bobines d'induction (31) disposées le long de la bande de support (20) et pouvant être alimentées individuellement en courant électrique, des moyens de détection de position (35) étant prévus pour la détection de la position de l'élément de transport (22) sur la bande de support (20), et l'objet (1 ; la) étant transféré dans une region de transfert (37) de la surface de transport (24) au dispositif de convoyage (15) situé en aval et comprenant un entraînement séparé (38), **caractérisé en ce que,** pour la diminution de l'écartement (A, A1, A2) entre des objets individuels (1 ; la) sur le dispositif de convoyage (15) situé en aval, la vitesse de convoyage (v4) du dispositif de convoyage (15) au point de transfert de la surface de transport (24) au dispositif de convoyage (15) est réduite temporairement par rapport à la vitesse (v2) de l'élément de transport (22) ou la vitesse (v2) de l'élément de transport (22) au point de transfert est ugmentée par rapport à la vitesse de convoyage (v4) du dispositif de convoyage (15).

2.  Procédé selon la revendication 1, **caractérisé en ce que** la vitesse (v2) de l'élément e transport (22) est augmentée déjà le long d'un tronçon avant le point de transfert.

3.  Procédé selon la revendication 1 ou 2, **caractérisé en ce que** plusieurs éléments de transport (22) sont prévus, dont l'écartement réciproque dans une région avant le point e transfert est réduit à un écartement minimum (aTe) entre les éléments de transport 22).

4.  Procédé selon l'une quelconque des revendications 1 à 3, **caractérisé en ce que** es objets (1 ; la) sont repris à partir d'un dispositif d'amenée (11) au moyen de l'au oins un élément de transport (22), et **en ce que** l'au moins un élément de transport (22) est, à l'exception d'une réduction temporaire éventuelle de vitesse pour la reprise des objets (1 ; la) à partir du dispositif d'amenée (11), entraîné en continu à une vitesse constante.

5.  Procédé selon l'une quelconque des revendications 1 à 4, **caractérisé en ce que** les objets (1 ; la) sont poussés le long de la surface de transport (24) par l'élément de transport (22).

6.  Système de transfert (10) pour mettre en oeuvre un procédé selon l'une quelconque es revendications 1 à 6, le système de transfert (10) servant au convoyage d'objets (1 ; la) sur un dispositif de convoyage (15) situé en aval, comprenant une bande de upport (20) réalisée de préférence de manière fermée, sur laquelle est disposé au oins un élément de transport mobile (22) pour un objet (1 ; la) qui est déplacé le long d'une surface de transport (24) par l'élément de transport (22), l'élément de transport (22) comprenant au moins un élément d'aimant permanent (32) qui est disposé en liaison fonctionnelle avec des bobines d'induction (31) disposées le long de la bande de support (20) et pouvant être alimentées individuellement en courant électrique, des moyens de détection de position (35) étant prévus pour la détection de la position de l'élément de transport (22) sur la bande de support (20), et l'objet (1 ; la) étant ransféré dans une région de transfert (37) de la surface de transport (24) au dispositif e convoyage (15) situé en aval et comprenant un entraînement séparé (38), **caractérisé en ce qu'**un dispositif de commande (30) est prévu, lequel commande l'au moins un élément de transport (22) ou le dispositif de convoyage (15) de telle sorte qu'au point de transfert de l'objet (1 ; la) au dispositive de convoyage (15), celui-ci parvienne dans le dispositive de convoyage (15) avec un excès de vitesse.

7.  Système de transfert selon la revendication 6, **caractérisé en ce que** la région de transfert des objets (1 ; la) dans le dispositive de convoyage (15) se rouve dans une region d'entrée de courbe (37) de la bande de transport (20).

8.  Système de transfert selon la revendication 6 ou 7, **caractérisé en ce que** la région de reprise des objets (1 ; la) à partir du dispositif d'amenée (11) se trouve dans une égion de sortie de courbe (36) de la bande de transport (20). **10.** Système de transfert elon l'une quelconque des revendications 7 à 9, **caractérisé en ce que** l'élément de transport (22) comprend un élément d'entraînement (23) destiné à s'appliquer contre l'objet (1 ; la) de manière à le pousser.

9.  Système de transfert selon l'une quelconque des revendications 6 à 8, **caractérisé en ce que** l'élément de transport (22) comprend un élément d'entraînement (23) estiné à s'appliquer contre l'objet (1 ; la) de manière à le pousser.

**Fig. 1**

EP 2 704 967 B2

**Fig. 2**

Fig. 3

$T_{carrier}$

$A_2$

10

1a

15

22

1a

$V_3$

$V_4$

EP 2 704 967 B2

**EP 2 704 967 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009029314 A1
- US 6876107 B2